# EUROPÄISCHE PATENTSCHRIFT

(11) **EP 2 008 761 B1**
(45) Veröffentlichungstag und Bekanntmachung des Hinweises auf die Patenterteilung: **14.07.2010**
(21) Anmeldenummer: 08010028.2
(22) Anmeldetag: 02.06.2008
(51) Int. Cl.: B23Q 1/54, B23Q 35/10

(54) **Anordnung zur Aufnahme eines zu bearbeitenden Werkstückes**
Assembly for holding a workpiece for processing
Agencement de saisie d'une pièce à usiner à traiter

(30) Priorität: 26.06.2007 DE 102007029397
(43) Veröffentlichungstag der Anmeldung: 31.12.2008
(73) Patentinhaber: Amann Girrbach AG, 6842 Koblach (AT)
(72) Erfinder: Amann, Jürgen, 6842 Koblach (AT)
(74) Vertreter: Hofmann, Ralf U.

(56) Entgegenhaltungen:
- EP-A- 0 567 803
- WO-A-2006/067630
- DE-U1-202006 014 678

## Beschreibung

Die Erfindung betrifft eine Anordnung zur Aufnahme eines zu bearbeitenden Werkstückes, insbesondere zum Einsatz bei einem Kopierfräsgerät zur Bearbeitung von Werkstücken, wobei das zu bearbeitende Werkstück bewegbar und feststellbar gehalten ist, wobei die Anordnung von wenigstens zwei miteinander in Wirkverbindung stehenden, synchron verdreh- und verschwenkbaren Aufnahmeelementen zur Aufnahme eines zu bearbeitenden Werkstückes und eines abzutastenden Modells gebildet ist, welche an deren Oberseite eine Befestigung zur Halterung des Werkstückes und des Modells und/oder für einen das Werkstück oder das Modell aufnehmenden Spannrahmen aufweisen.

Eine solche Anordnung ist beispielsweise aus der WO 2006/067630 A2 oder der WO 2007/003355A1 bekannt geworden. Die in diesen Ausführungen vorgesehene Anordnung ist im Wesentlichen von einer Trägerplatte gebildet, welche Ausnehmungen zur Aufnahme von Spannrahmen aufweist, in welchen das abzutastende Modell oder das zu fräsende Werkstück gehalten sind. Die Arbeitsplatte ist hier um eine horizontale Achse drehbar und ferner sind die Spannrahmen in der Ebene der Arbeitsplatte drehbar, jedoch verriegelbar gehalten. Eine ähnliche Anordnung ist aus der EP 0 402 720 A1 bekannt. Auch dort sind das Modell und das Werkstück synchron drehbar und um eine gemeinsame horizontale Achse drehbar.

Die Erfindung hat sich zur Aufgabe gestellt, bei einer Anordnung der eingangs genannten Art eine Möglichkeit zu schaffen, die eingesetzten Modelle und Werkstücke in einem bestimmten Bereich in alle Richtungen zu verschwenken und auch zu verdrehen zu können.

Dies gelingt erfindungsgemäß dadurch, dass die Aufnahmeelemente halbkugelartig, und vorzugsweise damit schalenartig, ausgeführt und jeweils über ein Ringlagerteil an einem Grundteil geführt abgestützt sind.

Durch die erfindungsgemäßen Maßnahmen können die Aufnahmeelemente für das Modell und für das Werkstück nach beiden Richtungen verdreht und auch nach beliebigen Richtungen verschwenkt, also gekippt werden. Da die Bewegungen der Aufnahmeelemente synchron erfolgt, ist auch gewährleistet, dass die eingestellten Werte für die Vergrößerung oder Verkleinerung auch nach einer Dreh- oder Schwenkbewegung aufrechterhalten werden. Die gegenseitige exakte Lage von Modell und Werkstück bleibt erhalten. Es ist dabei möglich, das Werkstück und das Modell direkt in den Aufnahmeelementen zu montieren oder aber über Spannrahmen. Es ist dabei nur eine Anpassung der Befestigung vorzunehmen.

Bei den halbkugelartig, und damit vorzugsweise schalenartig, ausgeführten Aufnahmeelementen kann es sich um vollständige Halbkugeln handeln. Die Halbkugeln können aber auch bereichsweise abgeflacht oder mit Ausnehmungen versehen sein, wie dies die Ausführungsbeispiele zeigen. Jedenfalls ist dadurch eine einfache Konstruktion auch derjenigen Teile möglich, welche zur Befestigung und Halterung des Werkstückes und/oder des Modells oder der dazu eingesetzten Spannrahmen vorzusehen sind. Auch die Möglichkeiten für ein synchrones Verdrehen und/oder Verschwenken sind dadurch vielfältig einsetzbar. Durch die Ringlagerteile und die darin gelagerten halbkugelartig, und vorzugsweise damit schalenartig, ausgeführten Aufnahmeelemente, werden kugelgelenkartige Verbindungen geschaffen, die es ermöglichen, das Werkstück und das Modell zusätzlich zum Verdrehen synchron um eine Vielzahl von verschiedenen Achsen zu verschwenken.

Eine einfache Halterung der Aufnahmeelemente ist dann gegeben, wenn jedes halbkugelartig, und vorzugsweise damit schalenförmig, ausgebildete Aufnahmeelement in einem der nach oben offenen, zum Aufnahmeelement korrespondierend halbkugelartig ausgeführten Grundteile eingesetzt und über eines der Ringlagerteile geführt ist. Damit ist nicht nur eine gute Halterung, sondern auch eine optimale und exakte Führung der Aufnahmeelemente bei einem Verdrehen und/oder Verschwenken vorhanden.

Das Verdrehen und das Verschwenken erfolgt günstigerweise um voneinander verschiedene, und somit vorzugsweise also nicht aufeinanderliegende und vorzugsweise auch nicht parallele Achsen. Die Achse, um die das jeweilige Aufnahmeelement verdrehbar ist, liegt günstigerweise in einem von 0° und 180° abweichenden Winkel oder windschief zu derjenigen Achse bzw. zu denjenigen Achsen, um die das jeweilige Aufnahmeelement verschwenkt werden kann. Günstigerweise ist vorgesehen, dass die Achse, um die das jeweilige Aufnahmeelement gedreht werden kann, orthogonal zu der oder den Achsen, um die das jeweilige Aufnahmeelement verschwenkt werden kann oder worden ist, liegt. Dabei ist besonders bevorzugt, dass das bzw. die Aufnahmeelement(e) jeweils um mehrere, jeweils voneinander verschiedene Achsen verschwenkt werden kann (können). Bei einer kugelgelenkartigen Ausgestaltung sind die Aufnahmeelemente jeweils um beliebig viele Achsen verschwenkbar. Bei kugelgelenkartigen Ausgestaltungen bzw. Verbindungen und/oder wenn die Aufnahmeelemente ,vorzugsweise jeweils, halbkugelartig ausgebildet sind, schneiden sich die Drehachse und die Schwenkachse(n) des jeweiligen Aufnahmeelementes günstigerweise im Mittelpunkt der Drehbewegung der kugelgelenkartigen Ausgestaltung bzw. im der Halbkugel zuzuordnenden Kugelmittelpunkt. Dieser Kugelmittelpunkt ist durch die kugelförmig ausgestalteten Bereiche der Aufnahmeelemente vorgegeben. Die Befestigung zur Halterung des Werkstücks bzw. des Modells bzw. der Spannrahmen in den Aufnahmeelementen sind günstigerweise so ausgestaltet, dass der Mittelpunkt der Drehbewegung bzw. der Kugelmittelpunkt im Zentrum des entsprechend in der Befestigung gehalterten Werkstücks bzw. Modells zu liegen kommt.

Des Weiteren wird vorgeschlagen, dass die Aufnahmeelemente an ihrer Oberseite Klemmelemente zur Halterung des Werkstückes oder des Modells und/oder für einen das Werkstück oder das Modell aufnehmenden Spannrahmen aufweisen können. Wenn hier oben offene, also halbkugelartige und damit schalenartige Aufnahmeelemente eingesetzt sind, kann die Anordnung von Klemmelementen besonders einfach vorgenommen werden.

Eine besondere Ausbildung sieht vor, dass die Aufnahmeelemente miteinander verbunden sind und somit gleichlaufend verdreh- und verschwenkbar und in gleichen Stellungen feststellbar sind. Es kann dadurch eine echte Synchronbewegung erreicht werden.

In diesem Zusammenhang liegt eine vorteilhafte Konstruktion darin, dass die Aufnahmeelemente wenigstens je einen radial abstehenden Betätigungsarm aufweisen, wobei die Betätigungsarme über mindestens zwei Verbindungsstreben miteinander verbunden sind. Dadurch ist eine gleichlaufende Bewegung der Aufnahmeelemente sowohl beim Verdrehen als auch beim Verschwenken bzw. Kippen gewährleistet.

Eine zweckmäßige Ausführung sieht dabei vor, dass die Verbindungsstreben parallel zueinander verlaufend angeordnet sind und mit ihren Enden an zwei mit jeweils gleichem Abstand voneinander angeordneten Lagerbolzen angreifen und somit mit den Halterungen für die Lagerbolzen ein Parallelogramm bilden. Durch die Verbindung über ein Parallelogramm wird erreicht, dass die Aufnahmeelemente exakt synchron bewegbar sind und es daher immer eine spezielle Anpassung an die eingestellten Vergrößerungs- oder Verkleinerungswerte im Kopierfräsgerät gibt.

Hier ist es von besonderem Vorteil, wenn die Verbindungsstreben übereinander liegend angeordnet sind, so dass also das Parallelogramm zumindest in der Nullstellung der Aufnahmeelemente im Wesentlichen in einer vertikalen Ausrichtung liegt. Damit ist für eine ordnungsgemäße Synchronverstellung der Aufnahmeelemente noch eine spezielle Möglichkeit der exakten Verstellung erzielt worden.

Ferner wird vorgeschlagen, dass die Aufnahmeelemente pneumatisch, hydraulisch, elektromagnetisch und/oder mechanisch in dem bzw. den Grundteil(en) bzw. Ringlagerteil(en) gehalten und festlegbar sind. Es sind hier also mannigfache Möglichkeiten, um die Aufnahmeelemente in den Grundteilen zu halten, zu führen und in der eingestellten Lage zu fixieren. Je nach der konstruktiven Ausgestaltung der Aufnahmeelemente können also auch verschiedene Führungen, Halterungen und Verriegelungen eingesetzt werden.

Obwohl die Aufnahmeelemente in einem bestimmten Winkelbereich an sich schon verdrehbar ausgeführt sind, kann zusätzlich noch vorgesehen werden, dass die Spannrahmen und die diese aufnehmenden Öffnung in den Aufnahmeelementen kreisförmig ausgeführt sind, so dass die Spannrahmen in deren Ebene bei gelöster Klemmbefestigung um bis zu 360° verdrehbar sind.

Im Rahmen der Erfindung ist es auch möglich, dass die Aufnahmeelemente zumindest im Aufnahmebereich des zu bearbeitenden Werkstückes oder des abzutastenden Modells oder eben im Bereich der diese aufnehmenden Spannrahmen Durchtrittsöffnung aufweisen. Es kann dadurch die Möglichkeit geschaffen werden, dass der Frässtaub nach unten in das Aufnahmeelement oder einfach darunter liegende Abschnitte fallen kann.

In diesem Zusammenhang ist es auch denkbar, dass im Bereich der Aufnahmeelemente eine Absaugeinrichtung angeordnet ist. Dabei kann je nach besserer Wirkung eine Absaugung von unten, von der Seite oder aber von oben erfolgen. Es ist dabei lediglich darauf zu achten, dass die für die Absaugung erforderlichen Mittel die Bewegungsfreiheit der Aufnahmeelemente nicht behindern und die Zugänglichkeit und die Einsichtnahme zum Werkstück und zum Fräser nicht beeinträchtigen.

Die optimale Ausbildung und Anpassung an das Kopierfräsgerät ist dann gegeben, wenn die Aufnahmeelemente um einen Mittelpunkt verdreh- und verschwenkbar sind, der in der mittigen Nullstellung der Aufnahmeelemente im Auflagebereich der Spitzen der Fräsereinheit und der Tastereinheit liegt. Auf diese Weise ist eine Vorabeinstellung möglich, wobei gegebenenfalls auch eine Höhenverstellung und natürlich auch eine Seitenverstellung der Grundteile für die Aufnahmeelemente vorzusehen ist.

Bei einer bevorzugten Variante wird vorgeschlagen, dass die Aufnahmeelemente, vorzugsweise jeweils nach Art eines Kugelgelenkes verdreh- und verschwenkbar, vorzugsweise jeweils in einem der Ringlagerteile gehalten sind. Dies ermöglicht es, die Aufnahmeelemente, vorzugsweise zusätzlich zum Verdrehen, synchron um beliebig viele verschiedene Achsen zu verschwenken, wobei jeweils die Achse, um die das eine Aufnahmeelement verschwenkbar ist, günstigerweise im Sinne der Synchronisierung jeweils parallel zu der Achse verläuft, um die das andere Aufnahmeelement verschwenkbar ist. Hierdurch wird die Zugänglichkeit zu Werkstück und Modell jedenfalls deutlich verbessert. Dabei kann vorgesehen sein, dass die Kugelgelenke an der der Befestigung zur Halterung des Werkstückes oder des Modells abgewendeten Seite der Aufnahmeelemente angeordnet sind. Wenn bei einer solchen Anordnung allerdings der Mittelpunkt, um den die Aufnahmeelemente verdreh- und verschwenkbar sind, mit großem Abstand von dem Auflagebereich der Spitzen der Fräsereinheit und der Tastereinheit angeordnet ist, so ist eine solche Ausbildung eigentlich nur bei einem reinen 1:1-Kopieren vom Modell zum Werkstück sinnvoll einsetzbar ist. Es ist aber auch möglich, die Aufnahmeelemente, vorzugsweise jeweils, nach Art eines Kugelgelenks verdreh- und verschwenkbar, vorzugsweise jeweils in einem der Ringlagerteile, zu halten, ohne dass dabei eine Einschränkung auf reines 1:1 Kopieren hingenommen werden muss. Hierfür sollten das Modell und das Werkstück jedoch günstigerweise in der Äquatorebene der jeweiligen Kugel bzw. Halb- oder Teilkugel des Kugelgelenkes gelagert sein.

Weitere erfindungsgemäße Merkmale und besondere Vorteile werden in der nachstehenden Beschreibung anhand der Zeichnungen noch näher erläutert. Es zeigen:
- Fig.1: eine Schrägsicht einer Kopierfräsmaschine mit den erfindungsgemäßen Aufnahmeelementen;

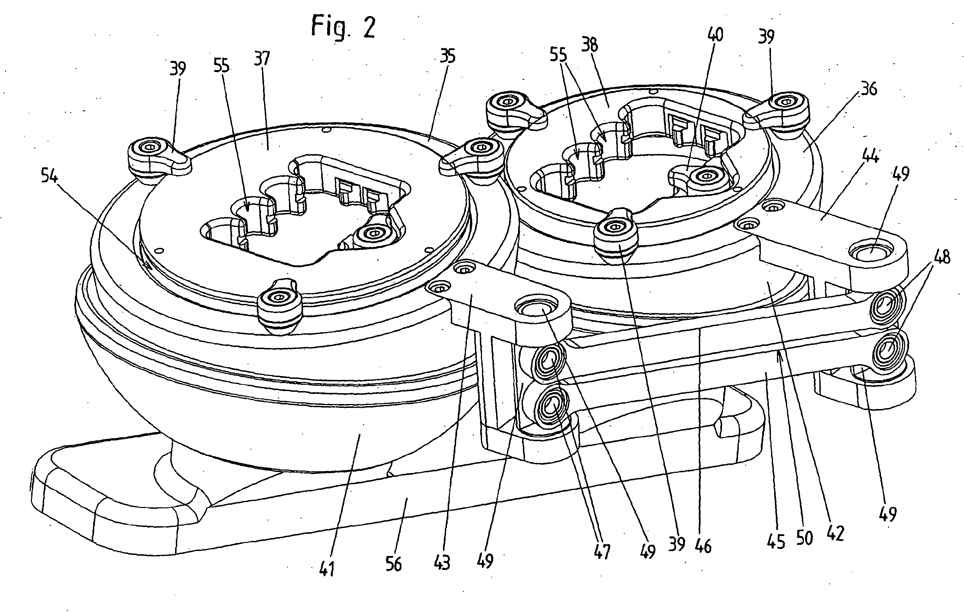

- Fig.2: eine vergrößerte Darstellung der Aufnahmeelemente in Schägsicht;
- Fig.3: einen Vertikalschnitt durch die Aufnahmeelemente und deren Grundteil;
- Fig.4: einen Vertikalschnitt durch die Aufnahmeelemente und deren Grundteil in einer weiteren Ausführungsform und
- Fig. 5 und 6: zwei Teilansichten zu einem dritten Ausführungsbeispiel

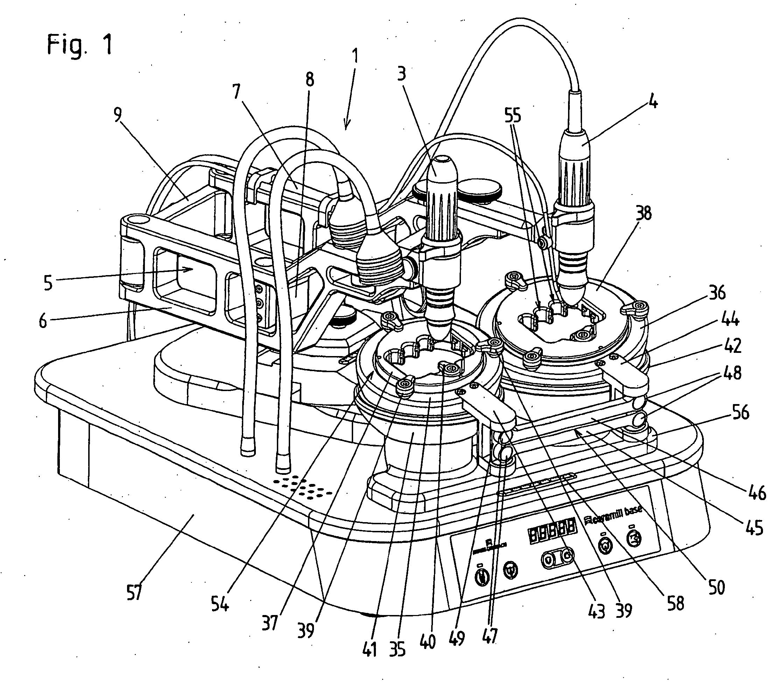

Das in Fig.1 dargestellte Kopierfräsgerät 1 dient zur Bearbeitung von Werkstücken aus beispielsweise keramischen Werkstoffen, wobei eine Tastereinheit 3 einem abzutastenden Modell und eine Fräsereinheit 4 dem zu bearbeitenden Werkstück zugeordnet sind. Tastereinheit 3 und Fräsereinheit 4 stehen nach Art eines Pantographen 5 miteinander in Wirkverbindung.

Der Pantograph 5 besteht in dieser Form aus zwei Armen 6,7 und zwei Hebel 8, 9, wobei die Arme und Hebel so verbunden sind, dass das so gebildete, veränderliche Viereck ein Parallelogramm darstellt.

Beim Pantograph 5 sind die Arme 6,7 und Hebel 8, 9 zur Veränderung des Verkleinerungs- oder Vergrößerungsfaktors zumindest teilweise in ihrer Länge verstellbar und der Bewegungsradius des Pantographen 5 ist ebenfalls einstellbar. Weiters sind entsprechend verdreh- und verschwenkbare, synchron verstellbare Aufnahmeelemente 35, 36 für das Modell und das Werkstück vorhanden.

An den gleich gerichteten Enden der zwei annähernd parallel ausgerichteten Arme 6,7 des Pantographen 5 sind einerseits die Tastereinheit 3 und andererseits die Fräsereinheit 4 angeordnet. Sowohl die Tastereinheit 3 als auch die Fräsereinheit 4 liegen also außerhalb der Verbindungsachsen von Armen und Hebeln.

Erfindungsgemäß ist nun eine Anordnung von wenigstens zwei miteinander in Wirkverbindung stehenden, synchron verdreh- und verschwenkbaren Aufnahmeelementen 35, 36 zur Aufnahme eines zu bearbeitenden Werkstückes und eines abzutastenden Modells vorgesehen, welche an deren Oberseite eine Befestigung zur Halterung des Werkstückes und des Modells und/oder für einen das Werkstück oder das Modell aufnehmenden Spannrahmen 37, 38 aufweist.

Die Achse, um die das jeweilige Aufnahmeelement 35 bzw. 36 verdrehbar ist, steht als Flächennormale orthogonal auf der jeweiligen Schwenkachse. Die Aufnahmeelemente 35 bzw. 36 sind durch die kugelgelenkartige Ausgestaltung jeweils um eine Vielzahl von Achsen schwenkbar, wobei durch die Synchronisierung die jeweiligen Schwenkachsen günstigerweise parallel zueinander liegen.

Die in den Zeichnungen gezeigten Aufnahmeelemente 35, 36 sind halbkugelartig und damit schalenartig ausgeführt.

Die Aufnahmeelemente weisen an ihrer Oberseite Klemmelemente 40 zur Halterung des Werkstückes oder des Modells und/oder Klemmelemente 39 für einen das Werkstück oder das Modell aufnehmenden Spannrahmen 37, 38 auf. Es ist also immer eine Schnellbefestigung möglich, wobei durch entsprechende Markierungen und/oder Raststellen eine immer gleich gerichtete Anordnung (mit gleicher Winkelverstellung) zu bewerkstelligen ist.

Eine spezielle Ausgestaltung sieht auch einen besonders ausgestalteten Grundteil 41, 42 vor. Jedes halbkugelartig und damit schalenförmig ausgebildete Aufnahmeelement 35, 36 ist somit in einem nach oben offenen, zum Aufnahmeelement 35, 36 korrespondierend halbkugelartig ausgeführten Grundteil 41, 42 eingesetzt und in diesem über die Ringlagerteile 51 geführt.

Wie schon erwähnt, sind die Aufnahmeelemente 35, 36 miteinander verbunden sind und somit gleichlaufend, also synchron verdreh- und verschwenkbar und in gleichen Stellungen feststellbar. Dazu gibt es natürlich eine Reihe von konstruktiven Gestaltungsmöglichkeiten.

Eine einfache und sehr wirksame Ausgestaltungen liegt dabei darin, die Aufnahmeelemente 35, 36 mit wenigstens je einen radial abstehenden Betätigungsarm 43, 44 auszustatten, wobei dann diese Betätigungsarme 43, 44 über mindestens zwei Verbindungsstreben 45, 46 miteinander verbunden sind. Die Verbindungsstreben 45, 46 sind parallel zueinander verlaufend angeordnet sind und greifen mit ihren Enden an jeweils zwei mit jeweils gleichem Abstand voneinander angeordneten Lagerbolzen 47, 48 an. Somit bilden die Verbindungsstreben 45, 46 mit den an den Betätigungsarmen 43, 44 angeordneten Halterungen 49 für die Lagerbolzen 47, 48 ein Parallelogramm 50.

Vorteilhaft sind die Verbindungsstreben 45, 46 übereinander liegend angeordnet, so dass also das Parallelogramm 50 zumindest in der Nullstellung der Aufnahmeelemente 35, 36 im wesentlichen in einer vertikalen Ausrichtung liegt.

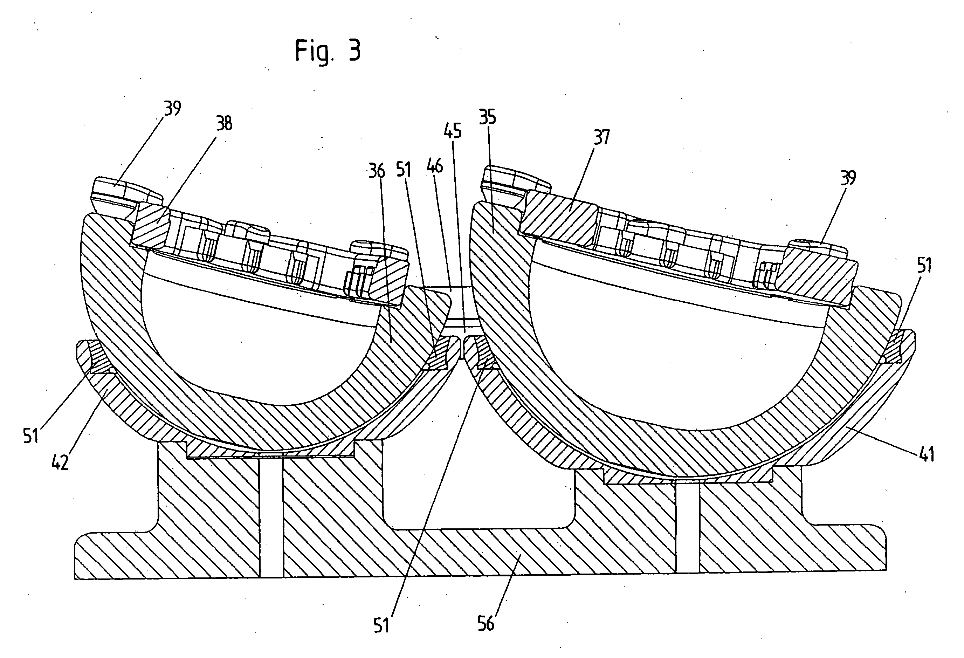

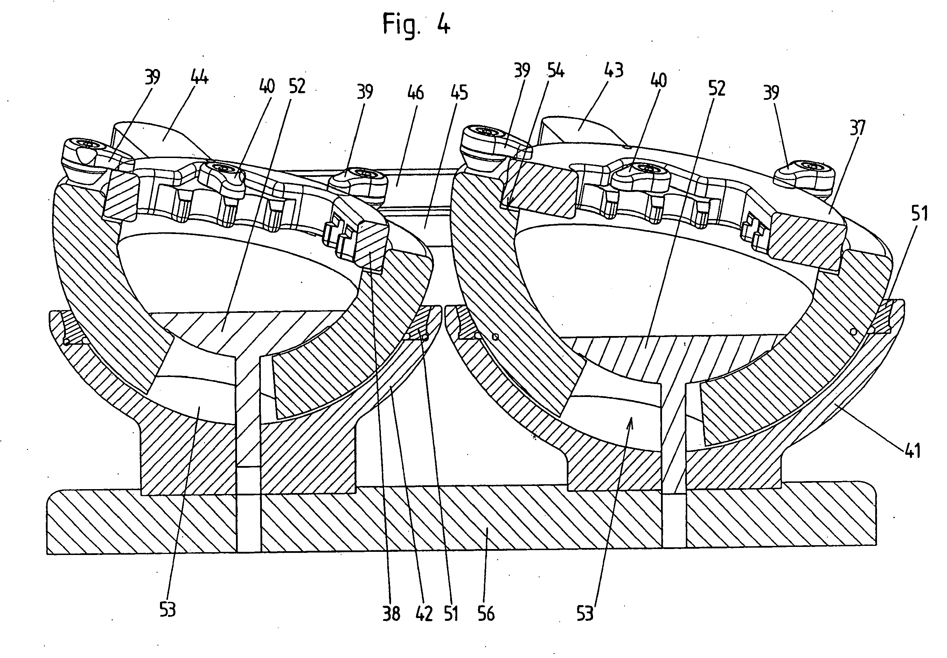

Die Aufnahmeelemente 35, 36 sind pneumatisch, hydraulisch, elektromagnetisch und/oder mechanisch in dem bzw. den Grundteil(en) 41, 42 gehalten und festlegbar. In den Schnittdarstellungen sind hier zwei Ausführungsvarianten ersichtlich. Bei beiden Ausführungen ist ersichtlich, dass sich die Aufnahmeelemente nur auf einen kleinen Bereich, nämlich über ein Ringlagerteil 51, an dem Grundteil 41, 42 geführt abstützen. Bei der Ausgestaltung nach der Fig.3 kann durch Aufbau eines Unterdruckes zwischen den Aufnahmeelementen 35, 36 und der Innenbegrenzung des Grundteiles 41, 42 eine Arretierung in einer eingestellten Verdreh- oder Verschwenklage erfolgen. Bei der Ausführung nach Fig.4 greift ein Halteelement 52 in eine an der Unterseite der Aufnahmeelemente 35, 36 ausgebildete Öffnung 53 ein. Das Halteelement 52 kann dann wiederum pneumatisch, hydraulisch, elektromagnetisch oder einfach mechanisch angezogen werden, um dadurch die Aufnahmeelemente 35, 36 entsprechend zu fixieren. Dies zeigt als Beispiel, dass zur Wahrnehmung der Funktion als Kugelgelenk bei den halbkugelartig, und vorzugsweise damit schalenartig, ausgeführten Aufnahmeelementen 35, 36 gegenüber einer vollständigen Halbkugel auch Teilbereiche der Wandung fehlen oder nicht kugelförmig ausgeführt sein können.

Die Spannrahmen 37, 38 und die diese aufnehmenden Öffnung 54 in den Aufnahmeelementen 35, 36 sind kreisförmig ausgeführt, so dass die Spannrahmen 37, 38 in deren Ebene bei gelöster Klemmbefestigung zusätzlich noch um bis zu 360° verdreht werden können.

Die Aufnahmeelemente 35, 36 können zumindest im Aufnahmebereich des zu bearbeitenden Werkstückes oder des abzutastenden Modells oder eben im Bereich der diese aufnehmenden Spannrahmen 37, 38 Durchtrittsöffnung 55 aufweisen. Im Rahmen der Erfindung ist es auch möglich, im Bereich der Aufnahmeelemente 35, 36 eine Absaugeinrichtung anzuordnen. Dabei können die Durchtrittsöffnungen 55 zusätzlich wirksam mit eingesetzt werden.

Bei den in den Zeichnungen dargestellten Ausgestaltungen ist jeweils vorgesehen, dass die Aufnahmeelemente 35, 36 um einen Mittelpunkt verdreh- und verschwenkbar sind, der in der mittigen Nullstellung der Aufnahmeelemente 35, 36 im Auflagebereich der Spitzen der Fräsereinheit 4 und der Tastereinheit 3 liegt. Die Achsen um die die Aufnahmeelemente 35, 36 jeweils dreh- und schwenkbar sind, schneiden sich günstigerweise in dem den jeweiligen Aufnahmeelement 35 bzw. 36 zugeordneten Mittelpunkt, welcher wie Eingangs bereits erwähnt günstigerweise mit dem Mittelpunkt der Drehbewegung der kugelgelenkartigen Ausgestaltung bzw. mit dem der jeweiligen Halbkugel zuzuordnenden Kugelmittelpunkt zusammenfällt. Dies ist besonders wesentlich, wenn der Pantograph 5 in einem Vergrößerungs- oder Verkleinerungsverhältnis die Bewegung von der Tastereinheit 3 auf die Fräsereinheit 4 übertragen soll.

Wie erwähnt, kann vorgesehen werden, dass die Aufnahmeelemente 35, 36 nach Art eines Kugelgelenkes verdreh- und verschwenkbar gehalten sind. Dabei ist es möglich, dass die Kugelgelenke an der der Befestigung zur Halterung des Werkstückes oder des Modells abgewendeten Seite der Aufnahmeelemente 35, 36 angeordnet sind.

Im Rahmen der Erfindung ist es auch denkbar, die Aufnahmeelemente 35, 36 größer als eine Halbkugel auszuführen, so dass dann wohl das Modell und das Werkstück entsprechend im Mittelpunkt der Kugel montiert werden, wobei aber der Rand der offenen Seite der Aufnahmeelemente gegebenenfalls umfangsgeschlossen den Aufnahmebereich für das Modell und das Werkstück und dann auch eines eingesetzten Spannrahmens 37, 38 überragt.

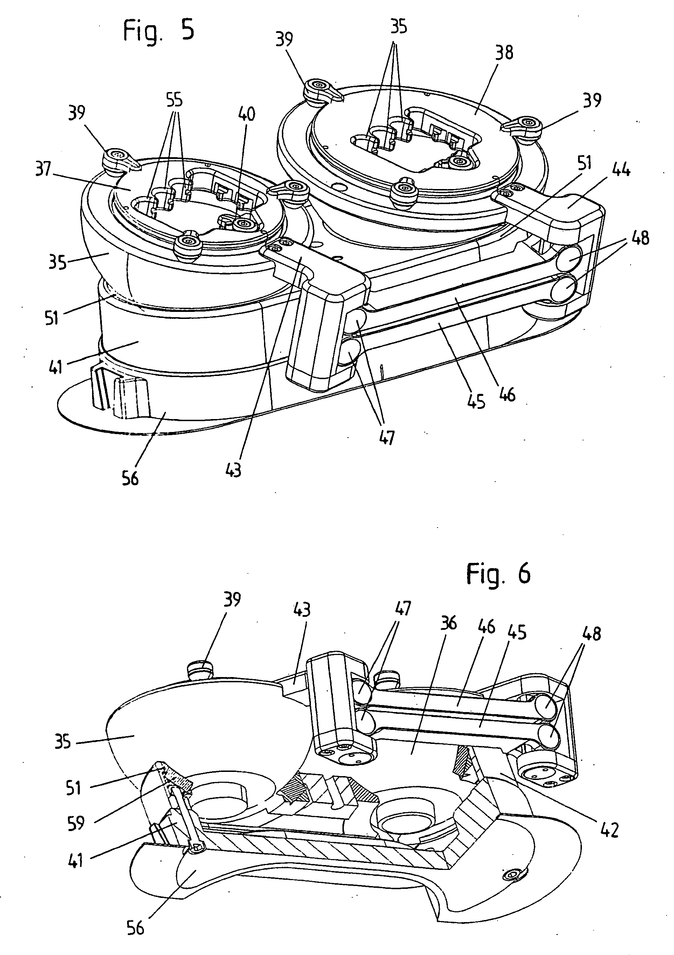

Im vierten Ausführungsbeispiel gem. der Fig. 5 und 6 ist nur der jeweils vordere Teil der Anordnung dargestellt, in dem sich die Aufnahmeelemente 35 und 36 befinden. Der Rest der Einrichtung bzw. Anordnung kann wie in Fig. 1 dargestellt, ausgeführt sein. Auch die Lagerung und Ausgestaltung der Aufnahmeelemente 35 und 36 entspricht in weiten Teilen den vorab gezeigten Ausführungsbeispielen, so dass im Weiteren nur noch auf die wesentlichen Unterschiede eingegangen wird. Diese bestehen zum Einen darin, dass die Grundteile 41 und 42 in diesem Ausführungsbeispiel nicht kugelschalenartig ausgebildet sind. Sie stellen hier lediglich die Verbindung zwischen den Ringlagerteilen 51 der beiden Aufnahmeelemente 35 und 36 und dem Standfuß 56 dar. Die Grundteile 41 und 42 haben somit nur noch eine Funktion als Verbindung zwischen Ringlagerteilen 51 und Standfuß 56. Um die Aufnahmeelemente 35 und 36 dennoch in einer einmal eingestellten Position arretieren zu können, sind bei diesem Ausführungsbeispiel in die Ringlagerteile 51 Elektromagneten 59 eingelassen, wie sie in der teilweise geschnittenen Darstellung gem. Fig. 6 zu sehen sind. Die Aufnahmeelemente 35 und 36 sind entsprechend magnetisierbar, z. B. aus Metall, ausgeführt. Durch Anschalten der Elektromagnete 59 werden die Aufnahmeelemente 35 und 36 in ihrer Position festgehalten bzw. arretiert. Werden die Elektromagnete 59 abgeschaltet, so können die Aufnahmeelemente 35 und 36 verschwenkt bzw. verdreht werden. Die Synchronisierung dieser Verschwenk- und Verdrehbewegung erfolgt wie in den anderen Ausführungsbeispielen und muss nicht noch einmal separat erläutert werden.

Die Aufnahmeelemente 35, 36 und daher auch die Grundteile 41, 42 sind vorteilhaft an einem gemeinsamen Standfuß 56 angeordnet, der auf einem Fußteil 57 einstellbar gehalten werden kann. Die Einstellung und die Verstellgröße ist durch ein auf dem Fußteil 57 aufgebrachtes Maßlineal 58 ablesbar.

Die Aufnahmeelemente 35, 36 können an ihrer Innenseite eine beliebige Form aufweisen, da lediglich die Außenkontur nach einer Art Kugelform gebildet sein soll. In den Zeichnungen und auch in der Beschreibung ist davon ausgegangen worden, dass jeweils zwei Aufnahmeelemente 35, 36 nebeneinander angeordnet sind. Es ist aber durchaus denkbar, mehr als zwei Aufnahmeelemente 35, 36 vorzusehen, die dann entsprechend z.B. mit einem Modell und mehreren, gleichzeitig zu bearbeitenden Werkstücken bestückt sind.

### Legende zu den Hinweisziffern:

- 1: Kopierfräsgerät
- 3: Tastereinheit
- 4: Fräseinheit
- 5: Pantograph
- 6: Arm (für Tastereinheit)
- 7: Arm (für Fräseinheit)
- 8: Hebel
- 9: Hebel
- 35: Aufnahmeelement
- 36: Aufnahmeelement
- 37: Spannrahmen
- 38: Spannrahmen
- 39: Klemmelement
- 40: Klemmelement
- 41: Grundteil
- 42: Grundteil
- 43: Betätigungsarm
- 44: Betätigungsarm
- 45: Verbindungsstrebe
- 46: Verbindungsstrebe
- 47: Lagerbolzen
- 48: Lagerbolzen
- 49: Halterung
- 50: Parallelogramm
- 51: Ringlagerteil
- 52: Halteelement
- 53: Öffnung
- 54: Öffnung
- 55: Durchtrittsöffnung
- 56: Standfuß
- 57: Fußteil
- 58: Maßlineal
- 59: Elektromagnete

## Patentansprüche

1. Anordnung zur Aufnahme eines zu bearbeitenden Werkstückes, insbesondere zum Einsatz bei einem Kopierfräsgerät zur Bearbeitung von Werkstücken, wobei das zu bearbeitende Werkstück bewegbar und feststellbar gehalten ist, wobei die Anordnung von wenigstens zwei miteinander in Wirkverbindung stehenden, synchron verdreh- und verschwenkbaren Aufnahmeelementen (35, 36) zur Aufnahme eines zu bearbeitenden Werkstückes und eines abzutastenden Modells gebildet ist, welche an deren Oberseite eine Befestigung zur Halterung des Werkstückes und des Modells und/oder für einen das Werkstück oder das Modell aufnehmenden Spannrahmen (37, 38) aufweisen, **dadurch gekennzeichnet, dass** die Aufnahmeelemente (35, 36) halbkugelartig, und vorzugsweise damit schalenartig, ausgeführt und jeweils über ein Ringlagerteil (51) an einem Grundteil (41, 42) geführt abgestützt sind.

2. Anordnung nach Anspruch 1, **dadurch gekennzeichnet, dass** die Aufnahmeelemente (35, 36) an ihrer Oberseite Klemmelemente (39, 40) zur Halterung des Werkstückes oder des Modells und/oder für einen das Werkstück oder das Modell aufnehmenden Spannrahmen (37, 38) aufweisen.

3. Anordnung nach Anspruch 1 oder 2, **dadurch gekennzeichnet, dass** jedes halbkugelartig, und vorzugsweise damit schalenförmig, ausgebildete Aufnahmeelement (35, 36) in einem der nach oben offenen, zum Aufnahmeelement (35, 36) korrespondierend halbkugelartig ausgeführten Grundteile (41, 42) eingesetzt und über eines der Ringlagerteile (51) geführt ist.

4. Anordnung nach einem der Ansprüche 1 bis 3, **dadurch gekennzeichnet, dass** die Aufnahmeelemente (35, 36) miteinander verbunden sind und somit gleichlaufend verdreh- und verschwenkbar, und vorzugsweise in gleichen Stellungen, feststellbar sind.

5. Anordnung nach Anspruch 4, **dadurch gekennzeichnet, dass** die Aufnahmeelemente (35, 36) wenigstens je einen radial abstehenden Betätigungsarm (43, 44) aufweisen, wobei die Betätigungsarme (43, 44) über mindestens zwei Verbindungsstreben (45, 46) miteinander verbunden sind.

6. Anordnung nach Anspruch 5, **dadurch gekennzeichnet, dass** die Verbindungsstreben (45, 46) parallel zueinander verlaufend angeordnet sind und mit ihren Enden an zwei mit jeweils gleichem Abstand voneinander angeordneten Lagerbolzen (47, 48) angreifen und somit mit den Halterungen (49) für die Lagerbolzen (47, 48) ein Parallelogramm (50) bilden.

7. Anordnung nach Anspruch 6, **dadurch gekennzeichnet, dass** die Verbindungsstreben (45, 46) übereinander liegend angeordnet sind, so dass vorzugsweise das Parallelogramm (50) zumindest in der Nullstellung der Aufnahmeelemente (35, 36) im wesentlichen in einer vertikalen Ausrichtung liegt.

8. Anordnung nach einem der Ansprüche 1 bis 7, **dadurch gekennzeichnet, dass** die Aufnahmeelemente (35, 36) pneumatisch, hydraulisch, elektromagnetisch und/oder mechanisch in einem bzw. mehreren Grundteil(en) (41, 42) gehalten und festlegbar sind.

9. Anordnung nach einem der Ansprüche 1 bis 8, **dadurch gekennzeichnet, dass** die Spannrahmen (37, 38) und die diese aufnehmende Öffnung (54) in den Aufnahmeelementen (35, 36) kreisförmig ausgeführt sind, so dass die Spannrahmen (37, 38) in deren Ebene bei gelöster Klemmbefestigung um bis zu 360° verdrehbar sind.

10. Anordnung nach einem der Ansprüche 1 bis 9, **dadurch gekennzeichnet, dass** die Aufnahmeelemente (35, 36) zumindest im Aufnahmebereich des zu bearbeitenden Werkstückes oder des abzutastenden Modells oder eben im Bereich der diese aufnehmenden Spannrahmen (37, 38) Durchtrittsöffnung (55) aufweisen.

11. Anordnung nach einem der Ansprüche 1 bis 10, **dadurch gekennzeichnet, dass** im Bereich der Aufnahmeelemente (35, 36) eine Absaugeinrichtung angeordnet ist.

12. Anordnung nach einem der vorstehenden Ansprüche, **dadurch gekennzeichnet, dass** die Aufnahmeelemente (35, 36) um einen Mittelpunkt verdreh- und verschwenkbar sind, der in der mittigen Nullstellung der Aufnahmeelemente (35, 36) im Auflagebereich der Spitzen der Fräsereinheit (4) und der Tastereinheit (3) liegt.

13. Anordnung nach einem der Ansprüche 1 bis 12, **dadurch gekennzeichnet, dass** die Aufnahmeelemente (35, 36), vorzugsweise jeweils, nach Art eines Kugelgelenkes verdreh- und verschwenkbar, vorzugsweise jeweils in einem der Ringlagerteile (51), gehalten sind.

14. Anordnung nach Anspruch 13, **dadurch gekennzeichnet, dass** die Kugelgelenke an der der Befestigung zur Halterung des Werkstückes oder des Modells abgewendeten Seite der Aufnahmeelemente (35, 36) angeordnet sind.

## Claims

1. Arrangement for receiving a workpiece to be machined, in particular for use in a copy milling apparatus for machining workpieces, the workpiece to be machined being movably and fixably held, the arrangement being formed from at least two operatively interconnected, synchronously rotatable and swivellable receiving elements (35, 36) for receiving a workpiece to be machined and a model to be traced, the elements having at their upper side a fastening for securing the workpiece and the model and/or for a clamping frame (37, 38) receiving the workpiece or the model, **characterised in that** the receiving elements (35, 36) are of hemisphere-like, and preferably thus bowl-like, design and are each supported in a guided manner on a base part (41, 42) via an annular bearing part (51).

2. Arrangement according to Claim 1, **characterised in that** the receiving elements (35, 36) have, at their upper side, clamping elements (39, 40) for securing the workpiece or the model and/or for a clamping frame (37, 38) receiving the workpiece or the model.

3. Arrangement according to Claim 1 or 2, **characterised in that** each receiving element (35, 36) of hemisphere-like, and preferably thus bowl-like, form is inserted in one of the upwardly open base parts (41, 42) of hemisphere-like design corresponding to the receiving element (35, 36) and is guided via one of the annular bearing parts (51).

4. Arrangement according to one of Claims 1 to 3, **characterised in that** the receiving elements (35, 36) are interconnected and thus synchronously rotatable and swivellable, and fixable preferably in the same positions.

5. Arrangement according to Claim 4, **characterised in that** the receiving elements (35, 36) each have at least one radially projecting actuating arm (43, 44), the actuating arms (43, 44) being interconnected via at least two connecting struts (45, 46).

6. Arrangement according to Claim 5, **characterised in that** the connecting struts (45, 46) are arranged in a manner running parallel to one another and with their ends engage on two bearing pins (47, 48) each arranged equidistantly from one another and thus form with the mounts (49) for the bearing pins (47, 48) a parallelogram (50).

7. Arrangement according to Claim 6, **characterised in that** the connecting struts (45, 46) are arranged one above the other, so that the parallelogram (50) is preferably substantially vertically oriented, at least in the initial position of the receiving elements (35, 36).

8. Arrangement according to one of Claims 1 to 7, **characterised in that** the receiving elements (35, 36) are pneumatically, hydraulically, electromagnetically and/or mechanically held and securable in one or more base part(s) (41, 42).

9. Arrangement according to one of Claims 1 to 8, **characterised in that** the clamping frames (37, 38) and the opening (54), receiving them, in the receiving elements (35, 36) are of circular design, so that the clamping frames (37, 38) are rotatable by up to 360° in the plane thereof when the clamping fastening is released.

10. Arrangement according to one of Claims 1 to 9, **characterised in that** the receiving elements (35, 36) have through-openings (55) at least in the receiving region of the workpiece to be machined or the model to be traced, or in the region of the clamping frames (37, 38) receiving said workpiece or model.

11. Arrangement according to one of Claims 1 to 10, **characterised in that** a suction-extraction device is arranged in the region of the receiving elements (35, 36).

12. Arrangement according to one of the preceding claims, **characterised in that** the receiving elements (35, 36) are rotatable and swivellable about a centre point lying in the contact region of the tips of the milling cutter unit (4) and the tracer unit (3), when the receiving elements (35, 36) are in the central initial position.

13. Arrangement according to one of Claims 1 to 12, **characterised in that** the receiving elements (35, 36) are preferably each held in one of the annular bearing parts (51), preferably each rotatably and swivellably in the manner of a spherical joint.

14. Arrangement according to Claim 13, **characterised in that** the spherical joints are arranged on the side of the receiving elements (35, 36) which faces away from the fastening for securing the workpiece or the model.

## Revendications

1. Agencement de saisie d'une pièce à usiner, en particulier pour l'utilisation dans une tireuse pour l'usinage de pièces à usiner, la pièce à usiner étant maintenue de manière à pouvoir se déplacer et être fixée, l'agencement étant formé d'au moins deux éléments de saisie (35, 36) se trouvant en liaison opérationnelle l'un avec l'autre, pouvant tourner et pivoter de manière synchrone pour la saisie d'une pièce à usiner et d'un modèle à palper, lesquels présentent sur leur côté supérieur une fixation pour le maintien de la pièce à usiner et du modèle et/ou pour un cadre de serrage (37, 38) saisissant la pièce ou le modèle, **caractérisé en ce que** les éléments de saisie (35, 36) sont réalisés en forme d'hémisphère et de préférence ainsi en forme de coque et sont appuyés de manière guidée respectivement par une partie de palier annulaire (51) sur une partie de base (41, 42).

2. Agencement selon la revendication 1, **caractérisé en ce que** les éléments de saisie (35, 36) présentent sur leur côté supérieur des éléments de serrage (39, 40) pour le maintien de la pièce ou du modèle et/ou pour un cadre de serrage (37, 38) saisissant la pièce ou le modèle.

3. Agencement selon la revendication 1 ou 2, **caractérisé en ce que** chaque élément de saisie (35, 36) réalisé en forme d'hémisphère et de préférence ainsi en forme de coque est inséré dans l'une des parties de base (41, 42) ouvertes vers le haut, réalisées en forme d'hémisphère de manière correspondante à l'élément de saisie (35, 36) et est guidé par l'une des parties de palier annulaires (51).

4. Agencement selon l'une quelconque des revendications 1 à 3, **caractérisé en ce que** les éléments de réception (35, 36) sont reliés l'un à l'autre et peuvent être fixés ainsi de manière à pouvoir tourner ou pivoter de manière synchrone et de préférence dans des positions identiques.

5. Agencement selon la revendication 4, **caractérisé en ce que** les éléments de saisie (35, 36) présentent au moins chacun un bras d'actionnement (43, 44) dépassant radialement, les bras d'actionnement (43, 44) étant reliés l'un à l'autre par au moins deux contrefiches de liaison (45, 46).

6. Agencement selon la revendication 5, **caractérisé en ce que** les contrefiches de liaison (45, 46) sont disposées s'étendant parallèlement l'une à l'autre et saisissent avec leurs extrémités deux tourillons (47, 48) disposés respectivement à la même distance l'un de l'autre et ainsi forment avec les supports (49) pour les tourillons (47, 48) un parallélogramme (50).

7. Agencement selon la revendication 6, **caractérisé en ce que** les contrefiches de liaison (45, 46) sont disposées l'une au-dessus de l'autre de sorte que de préférence, le parallélogramme (50) se trouve au moins dans la position initiale des éléments de saisie (35, 36) essentiellement dans un alignement vertical.

8. Agencement selon l'une quelconque des revendications 1 à 7, **caractérisé en ce que** les éléments de saisie (35, 36) sont maintenus ou peuvent être fixés par voie pneumatique, hydraulique, électromagnétique et/ou mécanique dans une ou plusieurs parties de base (41, 42).

9. Agencement selon l'une quelconque des revendications 1 à 8, **caractérisé en ce que** les cadres de serrage (37, 38) et l'ouverture (54) les logeant sont réalisés de manière circulaire dans les éléments de saisie (35, 36) de sorte que les cadres de serrage (37, 38) puissent être tournés de 360° au maximum dans leur plan lorsque la fixation de serrage est détachée.

10. Agencement selon l'une quelconque des revendications 1 à 9, **caractérisé en ce que** les éléments de réception (35, 36) présentent au moins dans la zone de saisie de la pièce à usiner ou du modèle à palper ou même dans la zone des cadres de serrage (37, 38) saisissant ceux-ci une ouverture de passage (55).

11. Agencement selon l'une quelconque des revendications 1 à 10, **caractérisé en ce qu'**un dispositif d'aspiration est disposé dans la zone des éléments de saisie (35, 36).

12. Agencement selon l'une quelconque des revendications précédentes, **caractérisé en ce que** les éléments de saisie (35, 36) peuvent être tournés et pivotés autour d'un point central qui se trouve dans la position initiale centrale des éléments de saisie (35, 36) dans la zone d'appui des pointes de l'unité de fraisage (4) et de l'unité de palpage (3).

13. Agencement selon l'une quelconque des revendications 1 à 12, **caractérisé en ce que** les éléments de saisie (35, 36) sont maintenus de préférence respectivement de manière à pouvoir tourner et pivoter comme une articulation sphérique, de préférence respectivement dans l'une des parties de palier annulaires (51).

14. Agencement selon la revendication 13, **caractérisé en ce que** les articulations sphériques sont disposées sur le côté des éléments de saisie (35, 36) éloignés de la fixation pour le maintien de la pièce ou du modèle.
